# EUROPÄISCHE PATENTSCHRIFT

(11) **EP 1 953 017 B1**
(45) Veröffentlichungstag und Bekanntmachung des Hinweises auf die Patenterteilung: **14.11.2012**
(21) Anmeldenummer: 08000039.1
(22) Anmeldetag: 03.01.2008
(51) Int. Cl.: B60H 1/34

(54) **Luftausströmer**
Air vent
Dispositif d'écoulement d'air

(30) Priorität: 31.01.2007 DE 102007005724
(43) Veröffentlichungstag der Anmeldung: 06.08.2008
(73) Patentinhaber: Behr GmbH & Co. KG, 70469 Stuttgart (DE)
(72) Erfinder: Wolf, Walter, 71570 Oppenweiler-Zell (DE)
(74) Vertreter: Grauel, Andreas

(56) Entgegenhaltungen:
- WO-A-2005/068233
- DE-A1-102004 038 016

## Beschreibung

Die Erfindung betrifft einen Luftausströmer, insbesondere für ein Kraftfahrzeug, gemäß dem Oberbegriff des Anspruchs 1.

Aus der DE 10 2004 038 016 A1 ist ein Luftausströmer zur Innenbelüftung von Räumen, wie Fahrgasträumen von Straßen- oder Schienenfahrzeugen, bekannt, der in einem ersten Betriebsfall einen gerichteten, strahlförmigen Luftaustritt ("Spotförmiger Luftaustritt") mit großer Eindringtiefe und in einem zweiten Betriebsfall einen diffusen Luftaustritt mit möglichst weit aufgefächertem Luftstrahl sowie beliebige, stetig zwischen diesen beiden Betriebsfällen einstellbare Mischbetriebsfälle ermöglicht, so dass sowohl eine schnelle Durchmischung der Raumluft als auch eine gleichmäßige, zugluftfreie Belüftung möglich ist.

Der gerichtete, strahlförmige Luftaustritt wird mit einer möglichst turbulenzarmen, gleichförmig gerichteten Rohrströmung, der diffuse Luftaustritt hingegen mittels Impulstransport in normaler Richtung zur Strahlachse durch verstärkte Turbulenz und/oder Drall unter Zuhilfenahme von Luftleitblechen erreicht. Beim genannten Luftausströmer werden diese Strömungen in getrennten Luftkanälen für die unterschiedlichen Betriebsfälle geführt.

Um jeweils einen von zwei zueinander parallel liegenden zylinderförmigen Teilkanäle ist dabei ein weiterer Teilkanal konzentrisch angeordnet, wobei die Luftströmung in den äußeren Teilkanälen jeweils durch Leiteinrichtungen mit Drall beaufschlagt wird; während die Luftströmung in den inneren Kanälen direkt austritt. Die Luftströme der einzelnen Teilkanäle sind dabei unabhängig voneinander steuerbar. Die genannte Bauform bedingt einen Luftaustritt aus zwei nebeneinander liegenden kreisrunden Austrittsflächen, die zusammen eine vergleichsweise große Fläche einnehmen.

Bei Fahrzeugen, in denen dieser Luftausströmer aus Platzgründen nicht in Frage kommt, könnte dieser entsprechend skaliert werden, was jedoch zu höheren Strömungsgeschwindigkeiten und damit Druckabfall und akustischen Problemen führt. Eine Lösung dieses Problems ist in der älteren Patentanmeldung DE 10 2006 050 999 beschrieben. Dort umfasst ein Luftausströmer einen Luftkanal und mindestens eine Vorrichtung zur Beeinflussung der Luftströmung, wobei die Vorrichtung derart ausgestaltet ist, dass sie in einem ersten Betriebsfall einen gerichteten, strahlförmigen Luftaustritt und in einem zweiten Betriebsfall einen diffusen Luftaustritt und stetig verstellbar alle zwischen diesen beiden Betriebsfällen liegenden Betriebsfälle ermöglicht, wobei in allen Betriebsfällen ein gemeinsamer Querschnitt des Luftkanals durchströmbar ist. Da hierbei mehrere synchron zu verstellende Luftleitelemente vorgesehen sind, wird eine entsprechend aufwändige Mechanik zur Synchronisation benötigt.

WO 2005/068233 offenbart einen Luftausströmer nach dem Oberbegriff des Anspruchs 1.

Der Erfindung liegt die Aufgabe zugrunde, einen alternativen Luftausströmer mit einem geringeren Druckabfall und somit mit kleiner Baugröße zur Verfügung zu stellen.

Diese Aufgabe wird erfindungsgemäß gelöst durch einen Luftausströmer mit den Merkmalen des Anspruchs 1.

Vorteilhafte Ausgestaltungen der Erfindung sind Gegenstand der Unteransprüche.

Der Luftausströmer umfasst dabei mindestens einen Luftführungskanal, der in einen äußeren, insbesondere ringförmigen Kanal und einen inneren Kanal unterteilt ist, wobei der äußere Kanal den inneren Kanal umgibt und parallel zu diesem verläuft und diese somit koaxial zueinander angeordnet sind. Erfindungsgemäß sind mehrere dem inneren Kanal und dem äußeren Kanal zugeordnete Luftleitelemente auf einer gemeinsamen Symmetrieachse, insbesondere gemeinsam oder verteilt angeordnet. Eine derartige Anordnung von äußeren und inneren Stell-, insbesondere Luftleitelementen ermöglicht eine besonders kompakte Bauform, indem die Baulänge des Luftausströmers deutlich reduziert ist. Insbesondere wird eine Verkürzung der Baulänge im Anströmbereich von Spotkanal (= innerer Kanal) und Diffuskanal (=äußerer Kanal) erzielt. Auch ist eine Entkopplung der Funktion und Luftführung von Spotkanal und Diffuskanal in besonders einfacher Art und Weise erreicht. Darüber hinaus ergibt sich eine einfachere Fertigungsmöglichkeit durch den weitgehend symmetrischen Aufbau. Durch die Nutzung des maximalen Querschnitts beider Teilkanäle (innerer und äußerer Kanal) in allen Betriebsfällen ergeben sich geringere Strömungsgeschwindigkeiten und dadurch geringere Druckverluste sowie ein besseres akustisches Verhalten.

In einer bevorzugten Ausführungsform bildet die Symmetrieachse die Mittelsenkrechte oder die Mittelwaagerechte des Luftführungskanals. Dabei sind die Luftleitelemente zweckmäßigerweise achsensymmetrisch bezüglich der Symmetrieachse ausgebildet. Beispielsweise sind diese in Art von Schmetterlingsklappen entlang der Symmetrieachse oder einer senkrecht zur Symmetrieachse verlaufenden Drehachse ausgebildet.

Vorzugsweise weist das jeweilige Luftleitelement eine quer zum Luftführungskanal verlaufende Drehachse auf. Dabei können die Drehachsen aller Luftleitelemente entlang der Symmetrieachse verteilt angeordnet sein und parallel zueinander sowie senkrecht zur Symmetrieachse verlaufen. Auch können die Drehachsen entlang der Symmetrieachse oder parallel zu dieser verlaufen.

In einer weiteren Ausführungsform weisen die Luftleitelemente eine gemeinsame quer zum Luftführungskanal verlaufende Drehachse auf. Hierzu sind den jeweiligen Luftleitelementen zugehörige Drehwellen entlang der Drehachse vorzugsweise zumindest teilweise ineinander verschiebbar angeordnet. Alternativ oder zusätzlich können die Drehwellen Verzahnungen aufweisen, die derart ineinander greifen, dass wenn ein Luftleitelement angetrieben wird, zwangsläufig das andere gegenläufig oder gleichläufig bewegt wird. Bei einer gegenläufigen Bewegung öffnen oder schließen sich die Luftleitelemente in bzw. entgegen der Strömungsrichtung.

Je nach vorgegebenem Antrieb können die Luftleitelemente synchron oder asynchron verstellbar angeordnet sein. Beispielsweise können die Luftleitelemente über einen gemeinsamen Antrieb, z. B. einem Elektromotor, der in die gemeinsame oder in eine der Drehwellen eingreift, angetrieben und somit geschwenkt oder gedreht werden. Auch können separate Antriebe für das jeweilige Luftleitelement vorgesehen sein. Eine unabhängige Ansteuerung der verschiedenen Luftleitelemente ermöglicht ein variables Ausströmprofil und eine variable Ausblasrichtung.

In einer bevorzugten Ausführungsform sind für den äußeren Kanal zwei äußere Luftleitelemente vorgesehen, deren zugehörige Drehachsen tangential zum inneren Kanal, insbesondere an dessen seitlichen Wänden oder oberen bzw. unteren Wand verlaufen. Mit anderen Worten: Die Drehachsen bilden Tangenten am inneren Kanal, wobei beiden äußeren Luftleitelemente auf gegenüberliegenden Seiten oder Wänden des inneren Kanals angeordnet sind.

Vorzugsweise sind die zwei äußeren Luftleitelemente als Klappen ausgebildet, die jeweils mit einer Auswölbung, in Art eines Außenbogens, und einer Einwölbung in Art einer Einbuchtung oder einer rundlichen Vertiefung versehen sind, wobei die Auswölbung im wesentlichen der Innenkontur des äußeren Kanals und die Einwölbung im wesentlichen der Außenkontur des inneren Kanals entspricht. Dies ermöglicht ein besonders sicheres und präzises Ablegen der äußeren Luftleitelemente in einer der Endlagenstellungen, z. B. am äußeren Kanal durch formschlüssiges Anliegen der Außenseite des jeweiligen Luftleitelements am äußeren Kanal zum vollständigen Schließen des äußeren Kanals und am inneren Kanal durch formschlüssiges Anliegen der Oberfläche des jeweiligen Luftleitelements am inneren Kanal zum vollständigen Öffnen des äußeren Kanals.

Hierzu weist der äußere Kanal mindestens eine Ausnehmung zur Aufnahme des jeweiligen äußeren Luftleitelements, insbesondere dessen Außenseite auf, die beim Form- und/oder Reibschluss mit der Innenseite des äußeren Kanals diesen vollständig schließt.

Darüber hinaus weist das jeweilige äußere Luftleitelement eine an die Außenkontur des inneren Kanals angepasste Kontur, insbesondere Oberflächenkontur auf, so dass sich das jeweilige äußere Luftleitelement in der einen den äußeren Kanal öffnenden Stellung um den inneren Kanal legt.

Für eine möglichst individuelle Strömungssteuerung sind die beiden äußeren Luftleitelemente im äußeren Kanal mit deren Außenseite in Strömungsrichtung zueinander oder gegeneinander, synchron oder asynchron bewegbar angeordnet. Vorzugsweise sind die beiden äußeren Luftleitelemente schwenkbar in seitlichen Öffnungen des äußeren Kanals gelagert und werden von dort über einen äußeren Antrieb verstellt.

In einer weiteren Ausführungsform sind die Drehachsen der beiden äußeren Luftleitelemente in Strömungsrichtung gesehen auf einer Ebene übereinander oder in Strömungsrichtung gesehen versetzt hintereinander angeordnet. Insbesondere eine hintereinander versetzte Anordnung der Drehachsen bewirkt in der den äußeren Kanal vollständig schließenden Stellung der Luftleitelemente eine besonders hohe Dichtheit in Art einer Labyrinthdichtung.

In einer weiteren Ausführungsform ist für den inneren Kanal ein inneres Luftleitelement vorgesehen, dessen Drehachse entlang der Mittelsenkrechten oder Mittelwaagerechten des inneren Kanals verläuft. Dabei ist das innere Luftleitelement als eine insbesondere kreisförmige Schmetterlingsklappe oder Schwenkklappe ausgebildet. Vorzugsweise sind die Drehachsen der äußeren Luftleitelemente zu der Drehachse des inneren Luftleitelements in Strömungsrichtung gesehen in einer Ebene übereinander angeordnet. Alternativ können diese entlang einer gemeinsamen Achse angeordnet sein. In einer weiteren alternativen Ausführungsform können die Drehachsen in Strömungsrichtung versetzt hintereinander angeordnet sein. D.h. die Drehachsen der äußeren Luftleitelemente liegen in Strömungsrichtung vor oder hinter der Drehachse des inneren Luftleftelements. Dies ermöglicht ein günstiges Ausströmprofil.

Ausführungsbeispiele der Erfindung werden anhand einer Zeichnung näher erläutert. Darin zeigen:
- Fig. 1: schematisch in perspektivischer Darstellung einen Luftausströmer mit einem inneren und äußeren Kanal mit mehreren Luftleitelementen, die in einer gemeinsamen Symmetrieachse bewegbar angeordnet sind,
- Fig. 2: schematisch in Draufsicht den Luftausströmer gemäß Figur 1,
- Fig. 3: schematisch in perspektivischer Darstellung einen Teil eines Luftausströmers mit einem inneren Kanal und diesen umgebenden äußeren Luftleitelementen in verschiedenen Positionen,
- Fig. 4: schematisch in perspektivischer Darstellung ein äußeres und ein inneres Luftleitelement mit einer gemeinsamen Symmetrieachse und Drehachse,
- Fig. 5: schematisch in perspektivischer Darstellung ein Ausführungsbeispiel für ein äußeres Luftleitelement,
- Fig. 6: schematisch im Längsschnitt eine Ausführungsform eines Luftausströmers mit einem inneren Luftleitelement in einer den inneren Kanal vollständig schließenden Stellung und mit einem äußeren Luftleitelement in einer den äußeren Kanal vollständig öffnenden Stellung,
- Fig. 7: schematisch im Längsschnitt eine Ausführungsform für einen inneren Kanal mit einem inneren Luftleitelement in einer den inneren Kanal vollständig öffnenden Stellung,
- Fig. 8: schematisch im Längsschnitt durch einen Luftausströmer mit einem äußeren, den äußeren Kanal teilweise öffnenden Luftleitelement,
- Fig. 9: schematisch im Längsschnitt einen Luftausströmer gemäß Fig.8 bei welchem beide Kanäle vollständig geschlossenen sind,
- Fig. 10: und Fig. 11 schematisch eine weitere Ausführungsform für ein äußeres Luftleitelement in teilweise offener Stellung,
- Fig. 12: schematisch eine alternative Ausführungsform für einen Luftausströmer mit mehreren Luftleitelementen, die entlang einer Symmetrieachse verteilt und parallel zueinander angeordnet sind,
- Fig. 13: schematisch einen Teil des Luftausströmers gemäß Figur 12 mit einem inneren Kanal und mit zwei tangential zu diesem angeordneten äußeren Luftleitelementen,
- Fig. 14: schematisch die äußeren Luftleitelemente gemäß Fig. 13 in einer teilweise offenen Stellung,
- Fig. 15: schematisch die äußeren Luftleitelemente gemäß Fig. 13 in geschlossener Stellung,
- Fig. 16: schematisch im Längsschnitt den Luftausströmer mit innerem und äußerem Kanal und drei Luftleitelementen, deren Drehachsen in Strömungsrichtung versetzt hintereinander angeordnet sind, und
- Fig. 17: schematisch im Längsschnitt eine alternative Ausführungsform für einen Luftausströmer mit drei Luftleitelementen, deren Drehachsen auf einer gemeinsamen Symmetrieachse verteilt und parallel zueinander angeordnet sind.

Einander entsprechende Teile sind in allen Figuren mit den gleichen Bezugszeichen versehen.

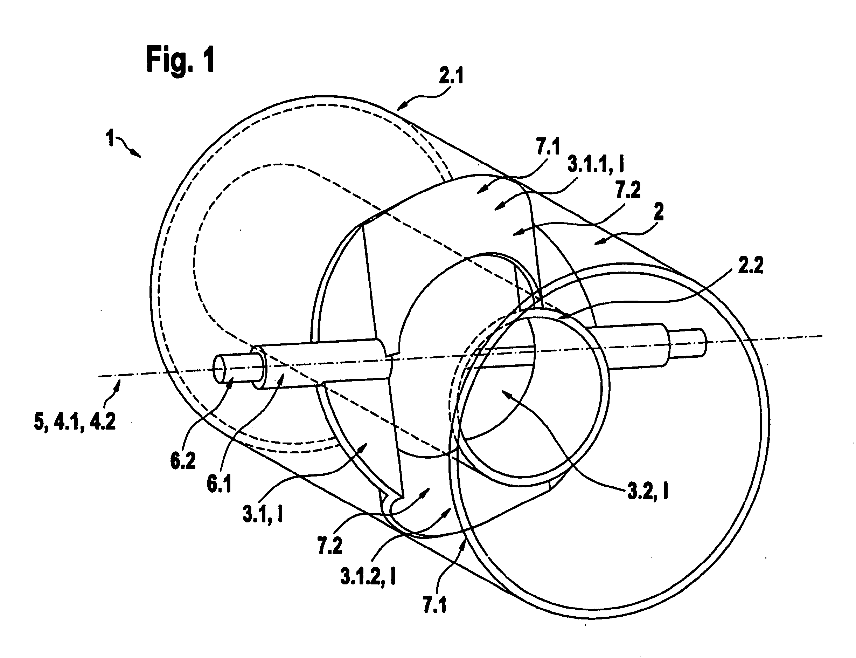

Figur 1 zeigt einen Luftausströmer 1 mit einem Luftführungskanal 2, der in einen äußeren Kanal 2.1 und einen inneren Kanal 2.2 im Anströmbereich unterteilt ist. Der äußere Kanal 2.1 ist koaxial zum inneren Kanal 2.2 angeordnet. D.h. der äußere Kanal 2.1 umgibt in Art eines Ringkanals den inneren Kanal 2.2 vollständig und verläuft parallel zu diesem. Der Luftführungskanal 2 weist einen kreisförmigen Querschnitt auf. Alternativ kann der Luftführungskanal 2 auch einen anderen geeigneten Querschnitt, z. B. rechteckigen Querschnitt, aufweisen.

Der Luftausströmer 1 dient in Art einer Düse der Zuführung von Luft zur Klimatisierung eines Fahrzeuginnenraums. Um einen möglichst guten Klimakomfort im Fahrzeuginnenraum zu erzielen, sind mehrere Luftleitelemente 3.1 und 3.2 zur Beeinflussung der Luftströmung zwischen zwei Endstellungen I bis II in eine beliebige Zwischenstellung stellbar. Dabei können die Zwischen- oder Endstellungen I, II einen vorgegebenen Betriebsfall darstellen. Das Luftleitelement 3.1 (auch äußeres Luftleit- oder Stellelement genannt) ist im äußeren Kanal 2.1 und das Luftleitelement 3.2 (auch inneres Luftleit- oder Stellelement genannt) ist im inneren Kanal 2.2 angeordnet. Dabei dient insbesondere der innere Kanal 2.2 (auch kurz Spot oder Spotkanal genannt) dem Betriebsfall "Spotförmiger Luftaustritt" für eine schnelle Klimatisierung, z. B. eine schnelle Kühlung, und der äußere Kanal 2.1 (auch Drallkanal genannt) dem Betriebsfall "Diffuser Luftaustritt" für eine angenehme Klimatisierung ohne Luftzugerscheinungen.

Die Luftleitelemente 3.1 und 3.2 sind zur Erzeugung der betreffenden Luftströmung um eine zugehörige Drehachse 4.1 bzw. 4.2 drehbar gelagert. Dabei liegen die Drehachsen 4.1 und 4.2 auf einer gemeinsamen Symmetrieachse 5, die insbesondere die Mittelwaagerechte des Luftführungskanals 2 bildet. Alternativ kann die Symmetrieachse 5 auch die Mittelsenkrechte des Luftführungskanals 1 bilden.

Die Luftleitelemente 3.1, 3.2 sind in Art von Klappen, beispielsweise Umlenkklappen, ausgeführt und separat und insbesondere synchron mit gleichem Drehsinn um die jeweils zugehörige Drehachse 4.1 und 4.2 schwenkbar. Im Ausführungsbeispiel nach Figur 1 weist das äußere Luftleitelement 3.1 zwei Klappensegmente 3.1.1 und 3.1.2 auf, die mit gleichem Drehsinn um die Drehachse 4.1 schwenkbar sind. Auch können die Luftleitelemente 3.1, 3.2 als Schmetterlingsklappen mit gegenläufigen Drehsinn ausgebildet sein.

Darüber hinaus können die Luftleitelemente 3.1 und 3.2 separat und asynchron um die jeweils zugehörige Drehachse 4.1 bzw. 4.2 geschwenkt werden. Hierzu sind entsprechend nicht näher dargestellte separate Antriebe erforderlich. Alternativ kann zur getrennten oder teilweise getrennten Verschwenkung der Luftleitelemente 3.1 und 3.2 auch eine Kurvenscheibenverstellvorrichtung am Gehäuse oder angebunden an eine der Drehwellen 6.1 oder 6.2 vorgesehen sein. Zur schwenkbaren Bewegung der Luftleitelemente 3.1 und 3.2 sind diese auf jeweils einer zugehörigen Drehweite 6.1 bzw. 6.2 gelagert. Die Drehwellen 6.1 und 6.2 können ineinander verschiebbar angeordnet sein. Sie können Verzahnungen aufweisen, die ineinander greifen, so dass durch Drehen einer der Drehwellen 6.1 oder 6.2 die andere zwangsweise mitläuft. Die Drehwellen 6.1 und 6.2 durchlaufen dabei den Luftführungskanal 2 über die gesamte Breite und sind durch Öffnungen in den Wänden der Kanäle 2.1, 2.2 geführt. Beim synchronen Bewegen ist ein einzelner Antrieb, z. B. ein Elektromotor vorgesehen, der außen an einer der beiden Drehwellen 6.1 oder 6.2 eingreift.

In der dargestellten Ausführungsform umfasst die Luftausströmer 1 zur Beeinflussung der Luftströmung ein äußeres Luftleitelement 3.1 und ein inneres Luftleitelement 3.2. Je nach Art und Größe des Luftführungskanals 2 kann eine entsprechende Anzahl von Luftleitelementen 3.1 und 3.2 je Luftausströmer 1 vorgesehen sein. Auch können in Strömungsrichtung gesehen mehrere Luftleitelemente 3.1 und 3.2 hintereinander im jeweiligen Kanal 2.1 bzw. 2.2 angeordnet sein.

In der Figur 1 sind die dargestellten Luftleitelemente 3.1 und 3.2 senkrecht zur Hauptströmungsrichtung ausgerichtet und somit in eine den jeweiligen Kanal 2.1 bzw. 2.2 vollständig schließende Stellung I gebracht. Dabei weist die jeweilige Außenseite der Klappensegmente 3.1.1 und 3.1.2 des Luftleitelements 3.1 eine an die Innenkontur des äußeren Kanals 2.1 angepasste Außenkontur auf. Hierzu sind die Klappensegmenten 3.1.1 und 3.1.2 jeweils mit einer Auswölbung 7.1 und einer Einwölbung 7.2 versehen. Die Auswölbung 7.1 entspricht im Wesentlichen der Innenkontur des äußeren Kanals 2.1 und die Einwölbung 7.2 im Wesentlichen der Außenkontur des inneren Kanals 2.2. Darüber hinaus kann der äußere Kanal 2.1 in nicht näher dargestellter Art und Weise entsprechend geformte Ausnehmungen zur Aufnahme der Klappensegmente 3.1.1 und 3.1.2 in der Endlagenstellung I aufweisen. Die Einwölbung 7.2 ermöglicht, dass sich das äußere Luftleitelement 3.1 in der den äußeren Kanal 3.1 öffnenden Stellung um den inneren Kanal 2.2 legt. Hierdurch ist eine die Strömung weitgehend gering beeinflussende Stellung des Luftleitelements 3.1 im äußeren Kanal 2.1 ermöglicht.

Das innere Luftleitelement 3.2 weist eine an die Innenoberfläche des inneren Kanals 2.2 angepasste Kontur auf. Insbesondere ist das innere Luftleitelement 3.2 kreisförmig ausgeführt, z. B. aus zwei halbrunden Klappensegmenten.

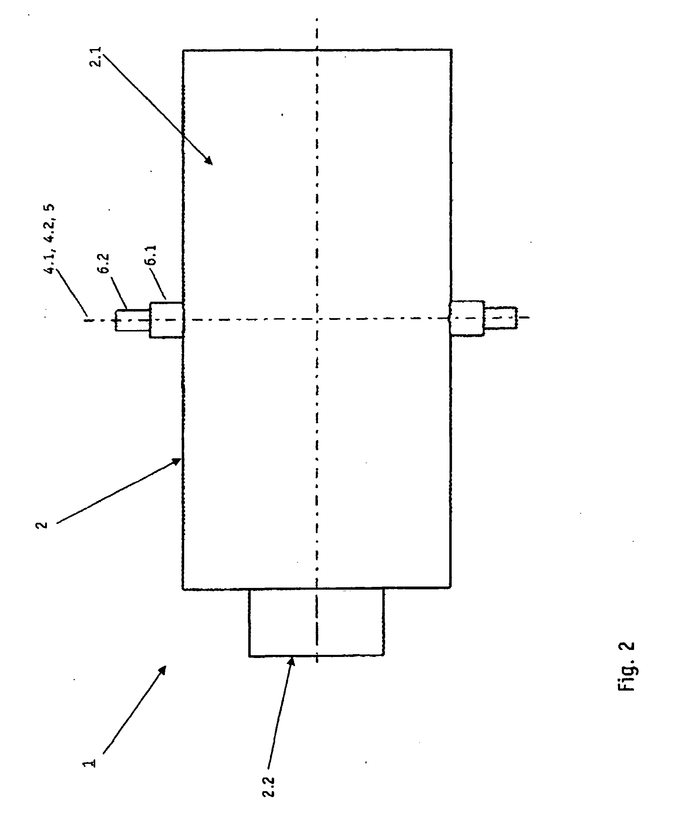

Figur 2 zeigt eine seitliche Draufsicht auf den Luftausströmers 1 gemäß Figur 1.

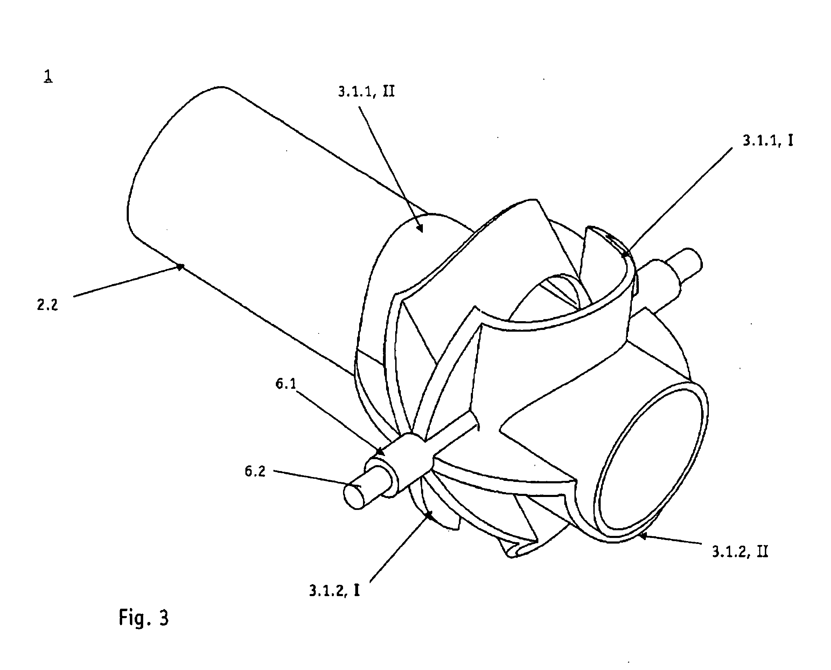

Figur 3 zeigt schematisch in perspektivischer Darstellung einen Teil eines Luftausströmers 1. Dabei ist zur besseren Übersichtlichkeit der innere Kanal 2.2 mit dem diesen umgebenden äußeren Luftleitelement 3.1 in den beiden Endlagenstellungen I und II und in einer Zwischenposition dargestellt. In der den äußeren Kanal 2.1 vollständig öffnenden Endlagenstellung 11 liegt das äußere Luftleitelement 3.1 mit seinen beiden Klappensegmenten 3.1.1 und 3.1.2 formschlüssig und vollständig umlaufend an der Außenoberfläche des inneren Kanals 2.2 an. Hierzu weist das jeweilige Klappensegment 3.1.1 und 3.1.2 eine entsprechend entlang der Längsrichtung des inneren Kanals 2.2 verlaufende halbzylindrische Form auf.

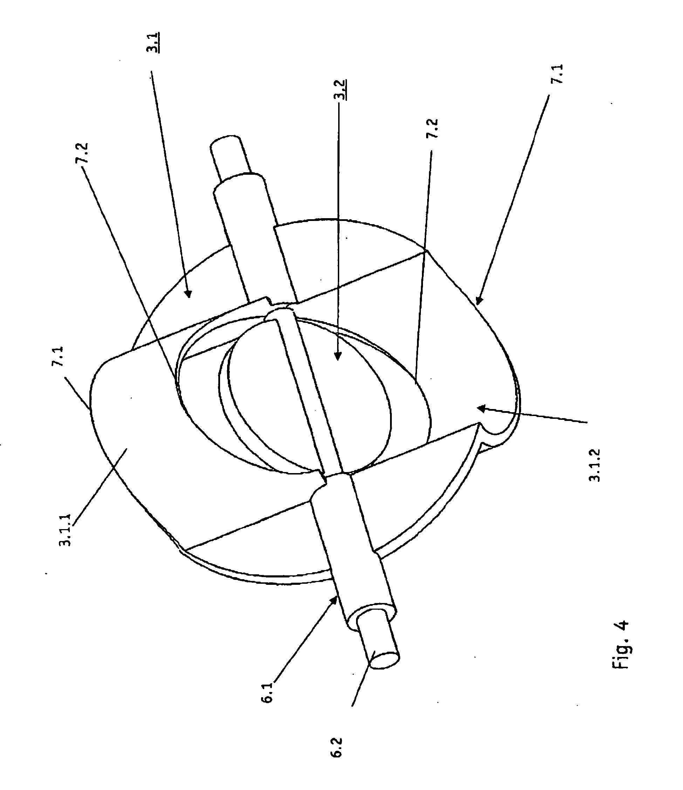

Figur 4 zeigt in vereinfachter Form zur besseren Übersichtlichkeit ohne Kanaldarstellung nur das äußere und innere Luftleitelement 3.1 bzw. 3.2 mit der gemeinsamen Symmetrieachse 5 und den zugehörigen entlang der Symmetrieachse 5 verlaufenden Drehachsen 4.1 bzw. 4.2. Die jeweiligen Klappensegmente 3.1.1 und 3.1.2 der Luftleitelemente 3.1 und 3.2 sind unabhängig voneinander, beispielsweise über eine geeignete Kinematik oder Antriebsmotoren verschwenkbar. Alternativ können die jeweiligen Klappensegmente 3.1.1 und 3.1.2 der Luftleitelemente 3.1 und 3.2 durch ineinander greifende gemeinsame Lagerung der zugehörigen Drehwellen 6.1 bzw. 6.2, z. B. durch Verzahnung, mit gleichem Drehsinn zwangsweise synchron geschwenkt oder gedreht werden.

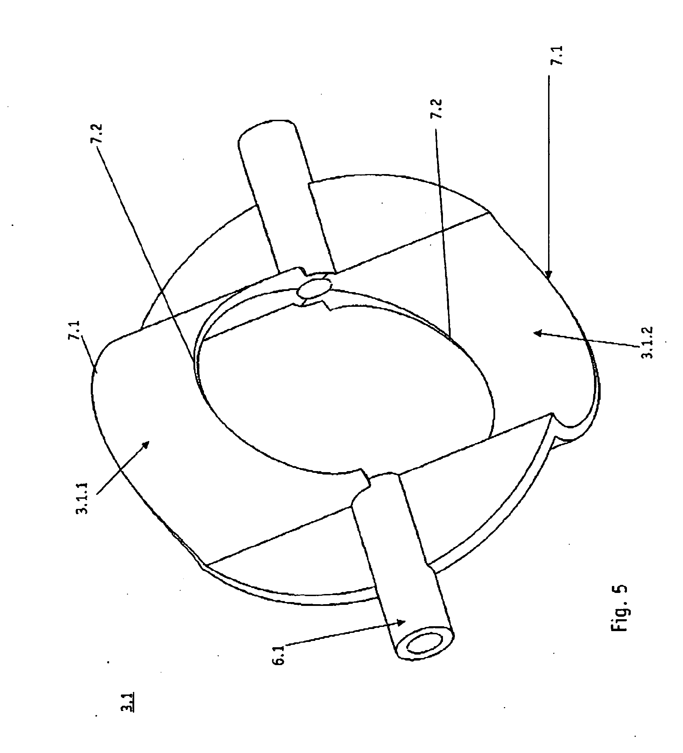

Figur 5 zeigt ein Beispiel für eine mögliche Ausführungsform eines äußeren Luftleitelement 3.1 mit halbzylindrischen Klappensegmenten 3.1.1 und 3.1.2, die mit Auswölbungen 7.1 für ein möglichst dicht schließendes Klappenende und Einwölbungen 7.2 für eine strömungsgünstige Ablage in der Offenstellung versehen sind.

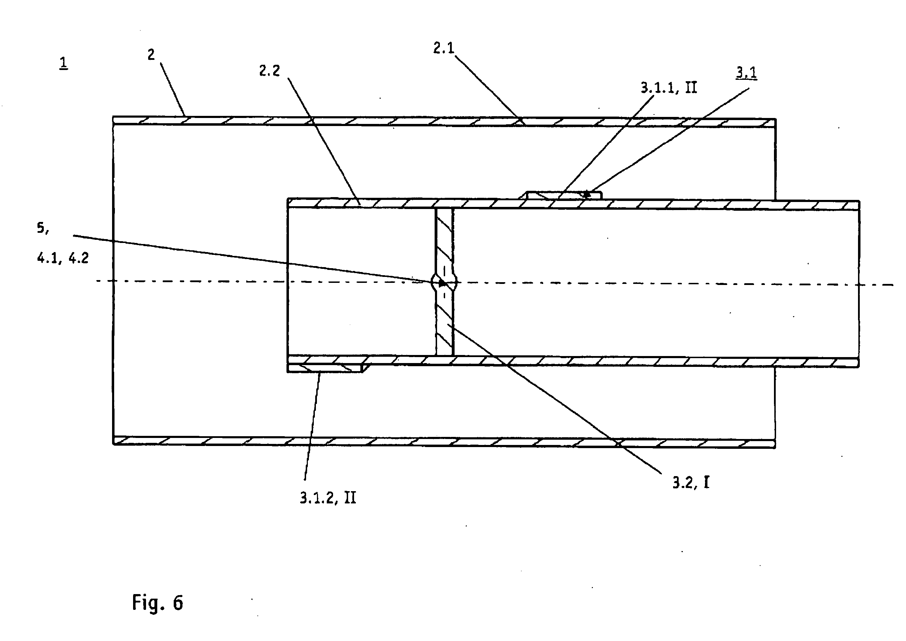

Figur 6 zeigt schematisch im Längsschnitt eine Ausführungsform eines Luftausströmers 1 mit einem inneren Luftleitelement 3.2 in einer den inneren Kanal 2.2 vollständig schließenden Stellung I und mit einem äußeren Luftleitelement 3.1 mit zwei Klappensegmenten 3.1.1 und 3.1.2 in einer den äußeren Kanal 2.1 vollständig öffnenden Stellung II.

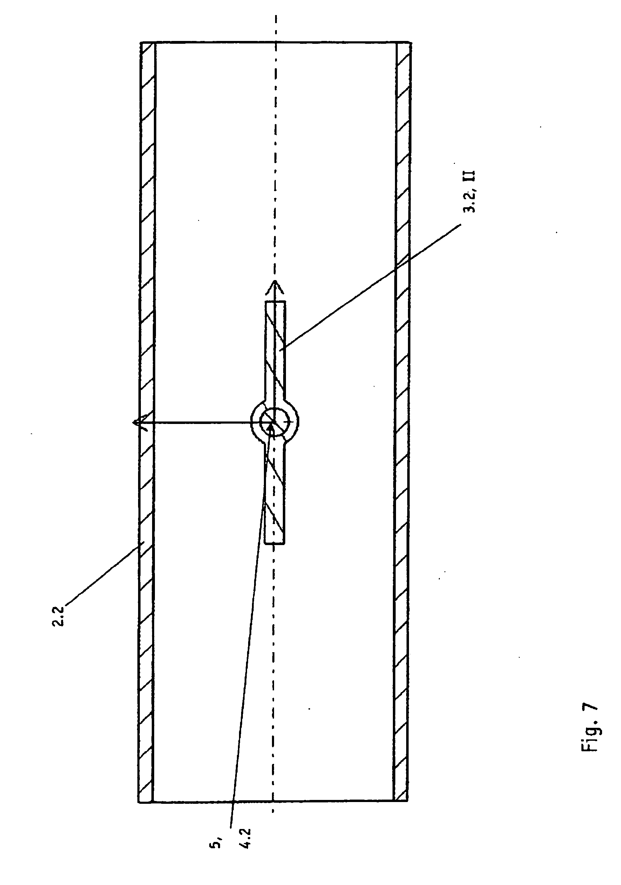

Figur 7 zeigt im Längsschnitt eine weitere Ausführungsform für einen inneren Kanal 2.2 mit einem inneren Luftleitelement 3.2 in einer den inneren Kanal 2.2 vollständig öffnender Stellung I.

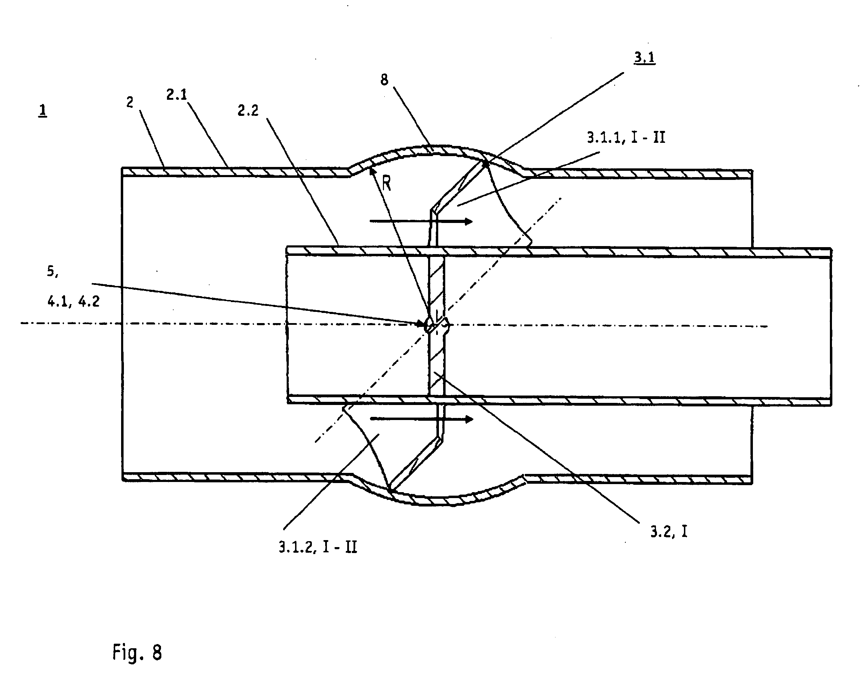

Figur 8 zeigt im Längsschnitt einen Luftausströmer 1 mit einem den äußeren Kanal 2.1 teilweise öffnenden, äußeren Luftleitelement 3.1 und einem inneren Luftleitelement 3.2, das den inneren Kanal 2.2 vollständig verschließt. Der Luftdurchtritt durch den äußeren Kanal 2.1 wird im dargestellten Beispiel im Außenbereich durch die Klappensegmente 3.1.1 und 3.1.2 verhindert und im Innenbereich zwischen den Klappensegmenten 3.1.1 und 3.1.2 und dem inneren Kanal 2.2, angedeutet durch Pfeile freigegeben. Um das ungehinderte Verschwenken des Luftleitelements 3.1 über den gesamten Schwenkwinkel von etwa 90° zu ermöglichen ist am äußeren, vorliegend kreiszylindrischen Kanal 2.1 eine Kanalerweiterung 8 vorgesehen, die als Teil einer Kugelfläche ausgeführt ist. Der Radius R der Kugelfläche entspricht im Wesentlichen dem Abstand zwischen Symmetrieachse 5 und dem Ende eines Klappensegments 3.1.1 oder 3.1.2.

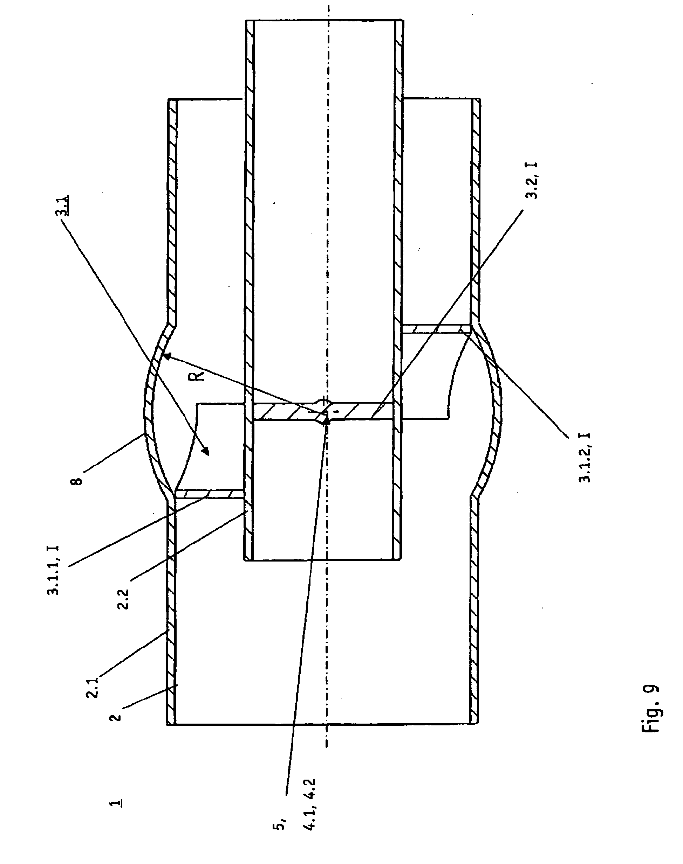

Figur 9 zeigt ebenfalls schematisch die Anordnung eines Luftausströmers 1 gemäß Fig.8 im Längsschnitt, wobei sich die Luftleitelemente 3.1 und 3.2 in einer Stellung befinden, in welcher sie beide Kanälen 2.1, 2.2 vollständig verschließen.

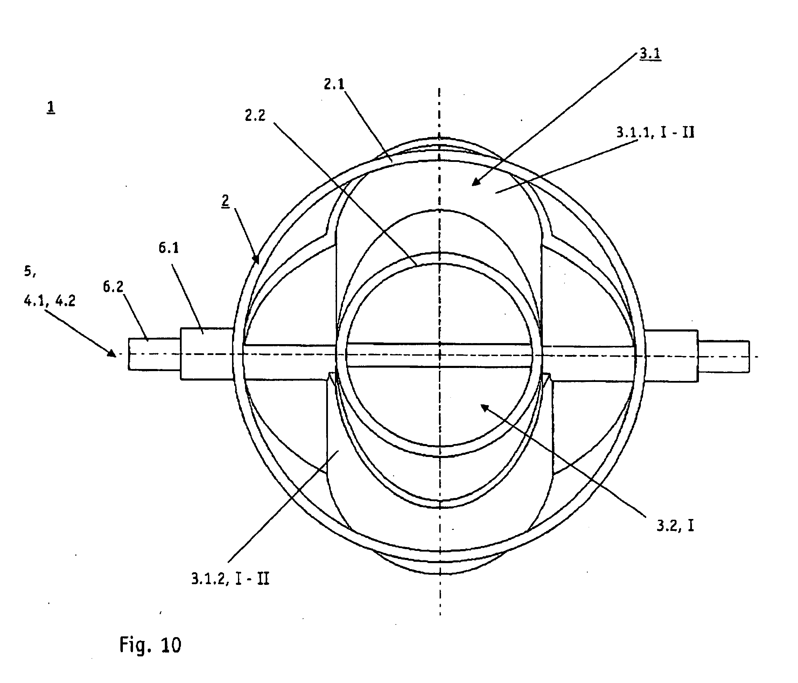

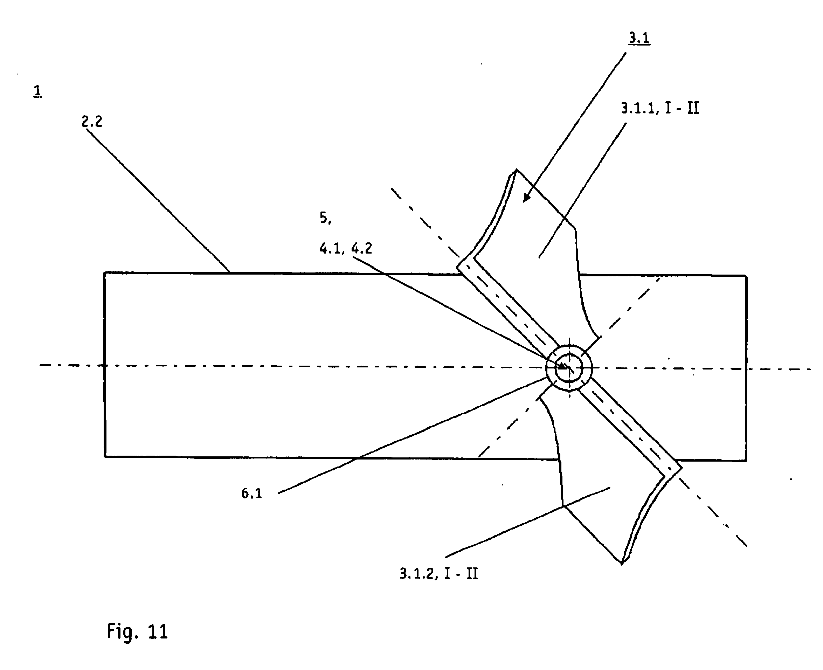

Figuren 10 und 11 zeigen eine weitere Ausführungsform für ein äußeres Luftleitelement 3.1 in teilweise offener Stellung zwischen den Endlagenstellungen I und II. Zum freien Bewegen der Außenseite der Klappensegmente 3.1.1 und 3.1.2 kann der äußere Kanal 2.1 in nicht näher dargestellter Art und Weise Ausnehmungen aufweisen, in welchen die Enden der Klappensegmente 3.1.1 und 3.1.2 formschlüssig in der geschlossenen Endstellung des Kanals 2.1 anliegen. Das innere Luftleitelement 3.2 ist in der Stellung "ZU" gezeigt.

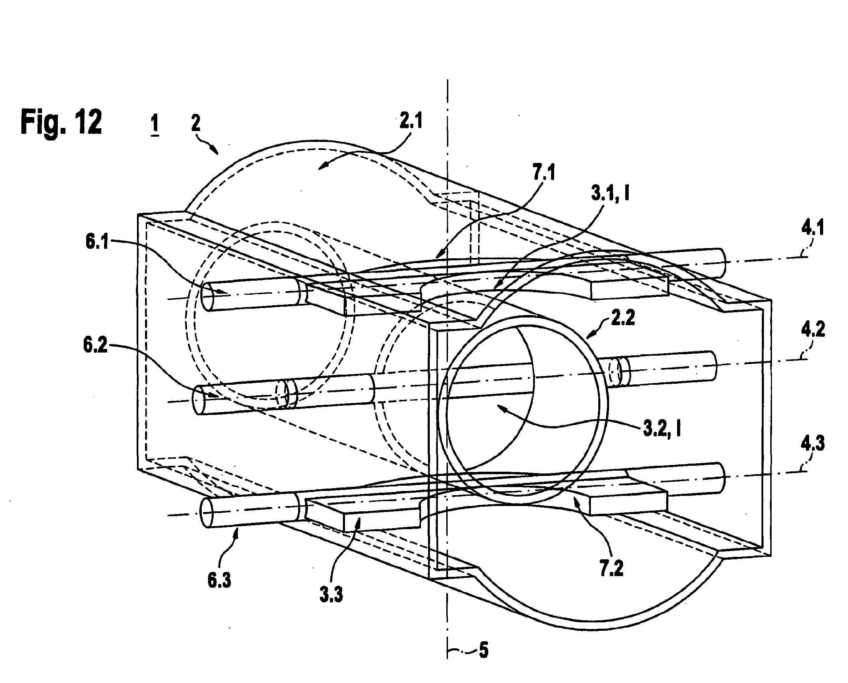

Figur 12 zeigt eine alternative Ausführungsform für einen Luftausströmer 1 mit mehreren Luftleitelementen 3.1, 3.2, 3.3, die entlang einer Symmetrieachse 5 verteilt und parallel zueinander angeordnet sind. Dabei verläuft die jeweilige Drehachse 4.1 bis 4.3 der betreffenden Luftleitelemente 3.1 bis 3.3 über die gesamte Breite des Luftführungskanals 2. Die Drehachse 2 des inneren Luftleitelements 3.2 verläuft im Wesentlichen entlang der Mittelwaagerechten. Die gemeinsame Symmetrieachse 5 aller drei Drehachsen 4.1 bis 4.3 verläuft senkrecht zu den Drehachsen 4.1 bis 4.3 entlang der Mittelsenkrechten des Luftführungskanals 2.

In diesem Ausführungsbeispiel sind zwei separate äußere Luftleitelemente 3.1 und 3.3 vorgesehen, deren zugehörigen Drehachsen 4.1 bzw. 4.3 im Wesentlichen tangential zum inneren Kanal 2.2 auf dessen Ober- und Unterseite angeordnet sind.

Das innere Luftleitelement 3.2 ist in der geschlossenen Stellung I dargestellt und weist zwei halbrunde Klappen auf, die um die zugehörige Drehwelle 6.2 synchron oder asynchron verstellbar gelagert sind. Die Außenabmessungen des inneren Luftleitelement 3.2 sind dabei derart ausgebildet, dass sie den Innenabmessungen des inneren Kanals 2.2 weitgehend entsprechend. Somit ist im geschlossenen Zustand des Kanals 2.2 ein Form- und Reibschluss der Klappenenden des inneren Luftleitelements 3.2 an der Innenwand des inneren Kanals 2.2 für eine hohe Dichtheit ermöglicht.

Die äußeren Luftleitelemente 3.1 und 3.3 sind zum Verschließen des als Ringkanal ausgebildeten äußeren Kanals 2.1 jeweils als halbrunde oder halbkreisförmige Ringe mit Auswölbungen 7.1 zum Form- und Reibschluss an der Innenwand des äußeren Kanals 2.1 und mit Einwölbungen 7.2 zum Form-und Reibschluss an der Außenwand des inneren Kanals 2.2. Die äußeren Luftleitelemente 3.1 und 3.3 sind der für den äußeren Kanal 2.1 offenen Stellung II dargestellt.

Die Luftleitelemente 3.1 bis 3.3 können separat oder gemeinsam über mehrere oder einen Antrieb oder mechanisch über einen Handantrieb oder manuell verstellt werden.

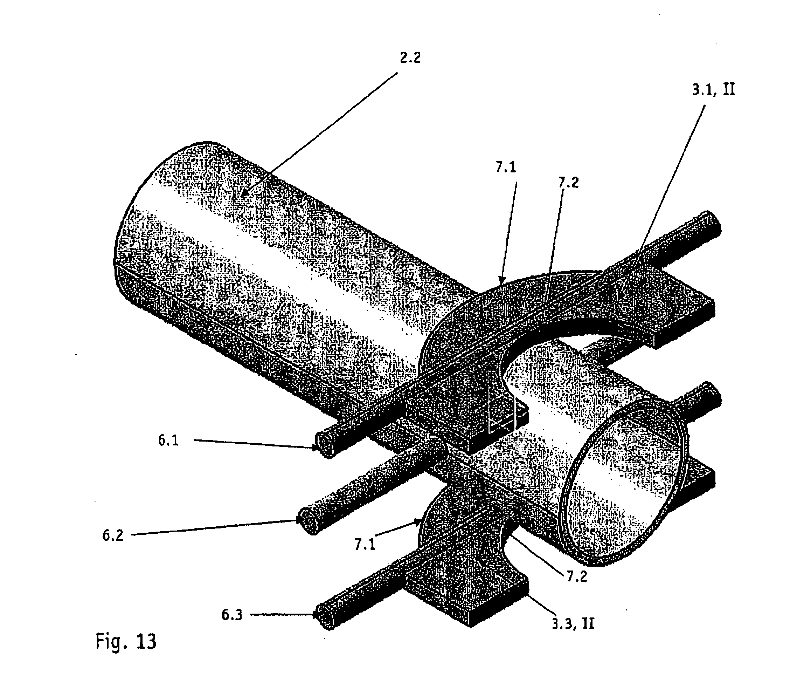

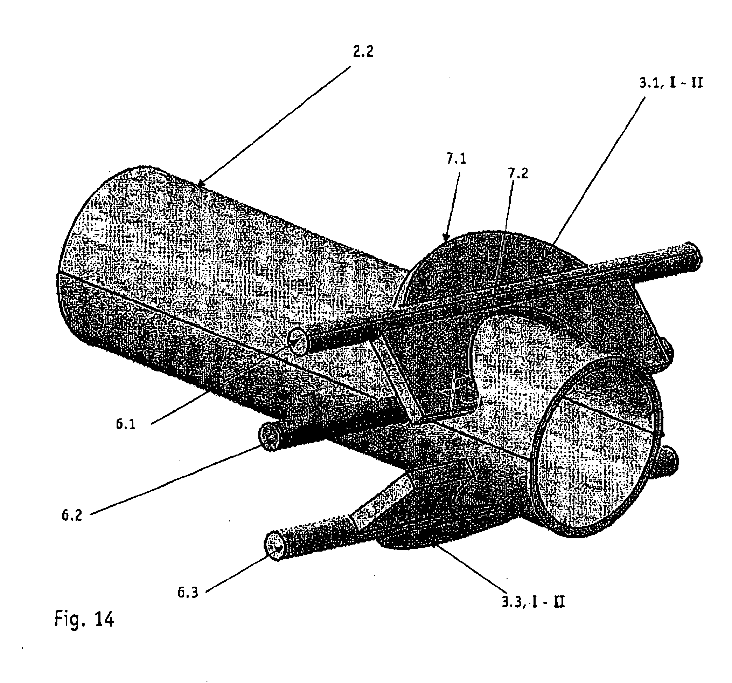

Figur 13 zeigt einen Teil des Luftausströmers 1 gemäß Figur 12 mit einem inneren Kanal 2.2 und mit zwei tangential zu diesem angeordneten äußeren Luftleitelementen 3.1 und 3.2, in der Stellung II - offener äußerer Kanal 2.1. Figur 14 zeigt die äußeren Luftleitelemente 3.1 und 3.3 gemäß Fig. 12 in einer teilweise offenen Stellung zwischen den Endlagenstellung I und II.

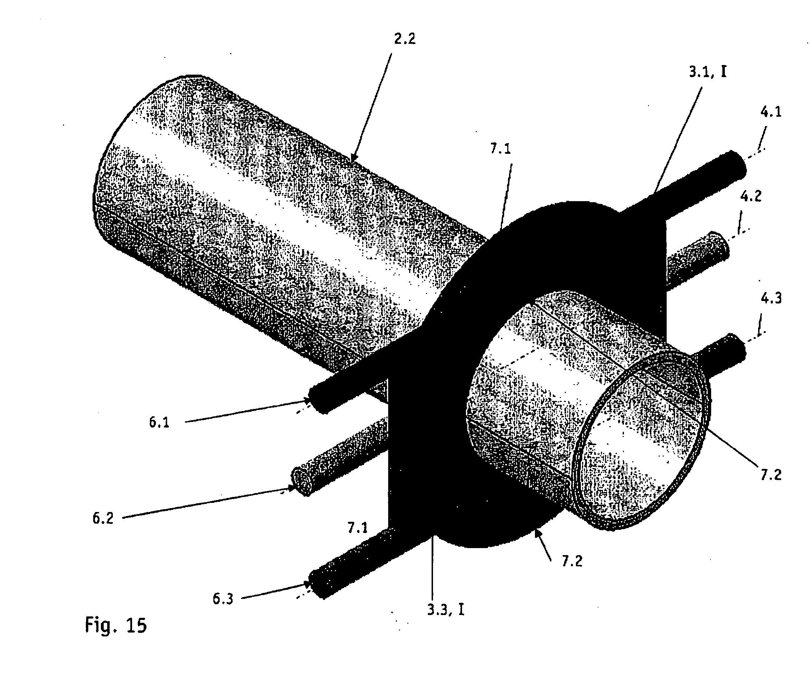

Figur 15 zeigt die äußeren Luftleitelemente 3.1 und 3.3 gemäß Fig. 12 in geschlossener Stellung 1. In diesem Ausführungsbeispiel verläuft die Drehachse 4.2 des inneren Luftleitelements 3.2 in Strömungsrichtung gesehen versetzt zu den Drehachsen 4.1 und 4.3 der äußeren Luftleitelemente 3.1 bzw. 3.3, welche übereinander und parallel zueinander angeordnet sind.

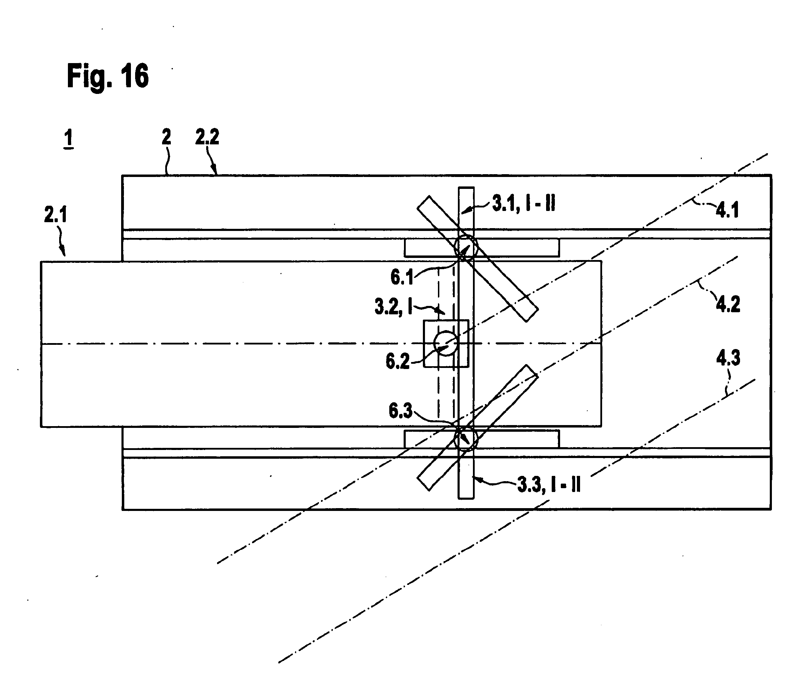

Figur 16 zeigt im Längsschnitt den Luftausströmer 1 gemäß Figur 15 mit innerem und äußerem Kanal 2.2 bzw. 2.1 und den drei Luftleitelementen 3.1 bis 3.3. Dabei ist die versetzte Anordnung der Drehachse 4.2 des inneren Luftleitelements 3.2 zu den Drehachsen 4.1 und 4.3 der äußeren Luftleitelemente 3.1 und 3.3 näher dargestellt. Die äußeren Luftleitelemente 3.1 und 3.3 sind in verschiedenen Positionen, AUF, ZU und eine Zwischenstellung gezeigt. Die äußeren Luftleitelemente 3.1 und 3.3 werden dabei gegenläufig in Strömungsrichtung zur Strömungsmitte hin bewegt oder entgegen der Strömungsrichtung zur Kanalwand des äußeren Kanals 2.1 bewegt. Je nach Vorgabe können die beiden äußeren Luftleitelemente 3.1 und 3.3 synchron oder asynchron bewegt werden. Auch können die Klappenenden mit Verzahnungen versehen sein, so dass die beiden Luftleitelemente 3.1 und 3.3 in der Stellung II (ZU) mit den Klappenenden ineinander greifen.

Das innere Luftleitelement 3.2 ist in der Position ZU dargestellt.

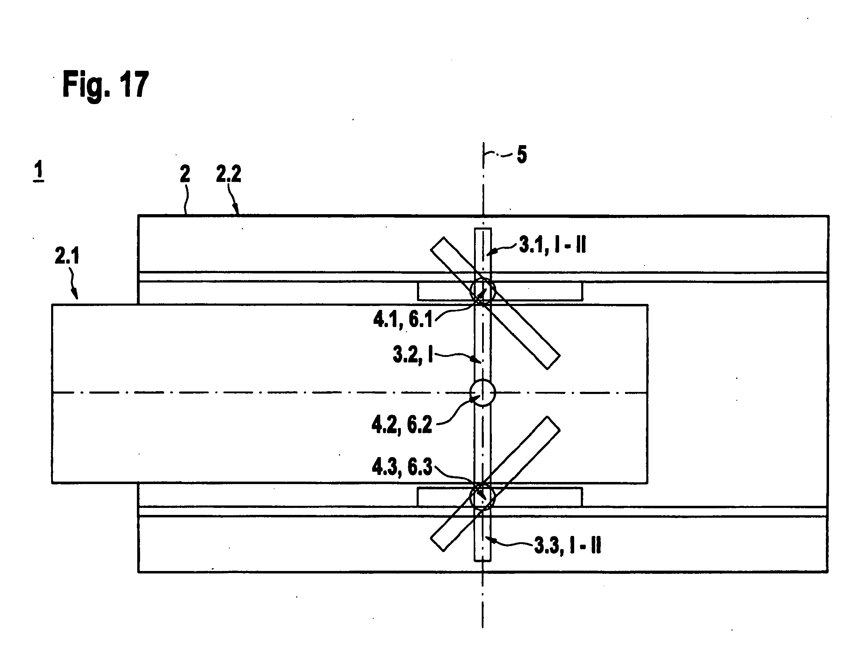

Figur 17 zeigt im Längsschnitt eine alternative Ausführungsform für einen Luftausströmer 1 mit drei Luftleitelementen 3.1 bis 3.3. Hierbei sind deren Drehachsen 4.1 bis 4.3 auf einer gemeinsamen Symmetrieachse 5 verteilt und parallel zueinander angeordnet.

Die Erfindung ist auf die gezeigten Ausführungsbeispiele nicht begrenzt. Insbesondere können bei einer anderen Querschnittsform des Luftführungskanals 2 entsprechend geeignet ausgebildete Luftleitelemente 3.1 bis 3.3 vorgesehen sein, denen gemeinsam ist, dass deren Drehachsen auf einer gemeinsamen Symmetrieachse liegen. Des Weiteren können die jeweiligen Luftleitelemente 3.1 bis 3.3 an ihren Randbereichen mit einer elastischen Dichtlippe versehen sein.

## Patentansprüche

1. Luftausströmer (1), insbesondere für ein Kraftfahrzeug, umfassend mindestens einen Luftführungskanal (2), der in einen äußeren, insbesondere ringförmigen Kanal (2.1) und einen inneren Kanal (2.2) unterteilt ist, wobei der äußere Kanal (2.1) den inneren Kanal (2.2) umgibt und parallel zu diesem verläuft, wobei mehrere dem inneren Kanal (2.2) und dem äußeren Kanal (2.1) zugeordnete Luftleitelemente (3.1 bis 3.3) auf einer gemeinsamen Symmetrieachse (5) angeordnet sind, **dadurch gekennzeichnet, dass** für den äußeren Kanal (2.1) ein oder mehrere äußere Luftleitelemente (3.1, 3.3) vorgesehen sind, deren zugehörige Drehachsen (4.1, 4.3) tangential zum inneren Kanal (2.2) verlaufen und das jeweilige äußere Luftleitelement (3.1, 3.3) eine an die Außenkontur des inneren Kanals (2.2) angepasste Kontur aufweist, so dass sich das jeweilige äußere Luftleitelement (3.1, 3.3) in der einen den äußeren Kanal (2.1) öffnenden Stellung (II) um den inneren Kanal (2.2) legt

2. Luftausströmer nach Anspruch 1, wobei die Symmetrieachse (5) die Mittelsenkrechte oder die Mittelwaagerechte des Luftführungskanals (2) bildet.

3. Luftausströmer nach Anspruch 1 oder 2, wobei die Luftleitelemente (3.1 bis 3.3) achsensymmetrisch bezüglich der Symmetrieachse (5) und/oder deren Drehachsen (4.1 bis 4.3) ausgebildet sind.

4. Luftausströmer nach einem der vorhergehenden Ansprüche, wobei das jeweilige Luftleitelement (3.1 bis 3.2) eine quer zum Luftführungskanal (2) verlaufende Drehachse (4.1 bis 4.2) aufweist, die entlang der Symmetrieachse (5) gemeinsam angeordnet sind.

5. Luftausströmer nach einem der vorhergehenden Ansprüche, wobei das jeweilige Luftleitelement (3.1 bis 3.3) eine quer zum Luftführungskanal (2) verlaufende Drehachse (4.1 bis 4.3) aufweist, die entlang der Symmetrieachse (5) verteilt angeordnet sind und parallel zueinander verlaufen.

6. Luftausströmer nach einem der vorhergehenden Ansprüche, wobei die Luftleitelemente (3.1 bis 3.2) eine gemeinsame, quer zum Luftführungskanal (2) verlaufende Drehachse (4.1 bis 4.2) aufweisen.

7. Luftausströmer nach Anspruch 6, wobei den jeweiligen Luftleitelementen (3.1 bis 3.2) zugehörige Drehwellen (6.1 bis 6.2) entlang der Drehachse (4.1 bis 4.2) zumindest teilweise ineinander verschiebbar und/oder miteinander verzahnt angeordnet sind.

8. Luftausströmer nach einem der vorhergehenden Ansprüche, wobei die Luftleitelemente (3.1 bis 3.3) gleichläufig oder gegenläufig verstellbar angeordnet sind.

9. Luftausströmer nach einem der vorhergehenden Ansprüche, wobei der oder die äußeren Luftleitelemente (3.1, 3.3) als Klappen ausgebildet sind, die jeweils mit einer Auswölbung (7.1) und einer Einwölbung (7.2) versehen sind, wobei die Auswölbung (7.1) im Wesentlichen der Innenkontur des äußeren Kanals (2.1) und die Einwölbung (7.2) im Wesentlichen der Außenkontur des inneren Kanals (2.2) entsprechen.

10. Luftausströmer nach einem der vorhergehenden Anspruche, wobei der äußere Kanal (2.1) mindestens eine Ausnehmung zur Aufnahme des jeweiligen äußeren Luftleitelements (3.1, 3.3) in einer diesen Kanal (2.1) vollständig schließenden Stellung (1) aufweist.

11. Luftausströmer nach einem der vorhergehenden Ansprüche, wobei der oder die äußeren Luftleitelemente (3.1, 3.3) zur Strömungssteuerung im äußeren Kanal (2.1) mit deren Außenseite in Strömungsrichtung zueinander oder gegeneinander bewegbar angeordnet sind.

12. Luftausströmer nach einem der vorhergehenden Ansprüche, wobei die Drehachsen (4.1, 4.3) des oder der äußeren Luftleitelemente (3.1, 3.3) in Strömungsrichtung gesehen auf einer Ebene übereinander oder in Strömungsrichtung gesehen versetzt hintereinander angeordnet sind.

13. Luftausströmer nach einem der vorhergehenden Ansprüche, wobei für den inneren Kanal (2.2) ein oder mehrere innere Luftleitelement (3.2) vorgesehen sind, deren Drehachsen (4.2) entlang der Mittelsenkrechten oder Mittelwaagerechten des inneren Kanals verlaufen und die in Strömungsrichtung versetzt hintereinander angeordnet sind.

14. Luftausströmer nach einem der vorhergehenden Ansprüche, wobei das oder die Luftleitelemente (3.1 bis 3.3) als Schwenk-, Umlenk- oder Schmetterlingsklappe ausgebildet sind.

15. Luftausströmer nach einem der vorhergehenden Ansprüche, wobei die Drehachsen (4.1, 4.3) des oder der äußeren Luftleitelemente (3.1, 3.3) zu der Drehachse (4.2) des inneren Luftleitelements (3.2) in Strömungsrichtung gesehen in einer Ebene übereinander oder versetzt hintereinander angeordnet sind.

## Claims

1. An air vent (1), in particular for a motor vehicle, said air vent comprising at least one airflow duct (2), which is divided into an outer, in particular annular, duct (2.1) and an inner duct (2.2), wherein the outer duct (2.1) surrounds the inner duct (2.2) and runs parallel thereto, wherein a plurality of air-guiding elements (3.1 to 3.3) assigned to the inner duct (2.2) and to the outer duct (2.1) are arranged on a common axis of symmetry (5), **characterised in that** one or more outer air-guiding elements (3.1, 3.3) are provided for the outer duct (2.1), the respective axes of rotation (4.1, 4.3) of said air-guiding elements running tangentially to the inner duct (2.2) and the respective outer air-guiding element (3.1, 3.3) having a contour adapted to the outer contour of the inner duct (2.2), such that the respective outer air-guiding element (3.1, 3.3) lies over the inner duct (2.2) in one position (II) opening the outer duct (2.1).

2. The air vent according to Claim 1, wherein the axis of symmetry (5) forms the mid-perpendicular or the mid-horizontal of the airflow duct (2).

3. The air vent according to Claim 1 or 2, wherein the air-guiding elements (3.1 to 3.3) are formed axially symmetrically with respect to the axis of symmetry (5) and/or their axes of rotation (4.1 to 4.3).

4. The air vent according to one of the preceding claims, wherein the respective air-guiding element (3.1 to 3.2) has an axis of rotation (4.1 to 4.2) running transverse to the airflow duct (2), said axes of rotation being arranged jointly along the axis of symmetry (5).

5. The air vent according to one of the preceding claims, wherein the respective air-guiding element (3.1 to 3.3) has an axis of notation (4.1 to 4.3) running transverse to the airflow duct (2), said axes of rotation being distributed along the axis of symmetry (5) and running parallel to one another.

6. The air vent according to one of the preceding claims, wherein the air-guiding elements (3.1 to 3.2) have a common axis of rotation (4.1 to 4.2) running transverse to the airflow duct (2).

7. The air vent according to Claim 6, wherein rotary shafts (6.1 to 6.2) associated with the respective air-guiding elements (3.1 to 3.2) are arranged along the axis of rotation (4.1 to 4.2) so as to be displaceable in one another and/or interlocked with one another, at least in part.

8. The air vent according to one of the preceding claims, wherein the air-guiding elements (3.1 to 3.3) are arranged so as to be adjustable in the same direction or in opposite directions.

9. The air vent according to one of the preceding claims, wherein the outer air-guiding element(s) (3.1, 3.3) are formed as flaps, which are each provided with a convexity (7.1) and a concavity (7.2), wherein the convexity (7.1) corresponds substantially to the inner contour of the outer duct (2.1) and the concavity (7.2) corresponds substantially to the outer contour of the inner duct (2.2).

10. The air vent according to one of the preceding claims, wherein the outer duct (2.1) has at least one recess for receiving the respective outer air-guiding element (3.1, 3.3) in a position (I) completely closing this duct (2.1.).

11. The air vent according to one of the preceding claims, wherein the outer air-guiding element(s) (3.1, 3.3) are arranged so as to be movably together or against one another with the outer face in the direction of flow so as to control the flow in the outer duct (2.1).

12. The air vent according to one of the preceding claims, wherein the axes of rotation (4.1, 4.3) of the outer air-guiding element(s) (3.1, 3.3) are arranged above one another in a plane, as viewed in the direction of flow, or are arranged offset in succession, as viewed in the direction of flow.

13. The air vent according to one of the preceding claims, wherein one or more inner air-guiding elements (3.2) are provided for the inner duct (2.2), the axes of rotation (4.2) of said inner air-guiding elements running along the mid-perpendicular or mid-horizontal of the inner duct and being arranged offset in succession in the direction of flow.

14. The air vent according to one of the preceding claims, wherein the air-guiding element(s) (3.1 to 3.3) are formed as pivoting, deflecting or butterfly flaps.

15. The air vent according to one of the preceding claims, wherein the axes of rotation (4.1, 4.3) of the outer air-guiding elements (3.1, 3.3) are arranged above one another or offset in succession in relation to the axis of rotation (4.2) of the inner air-guiding element (3.2), as viewed in the direction of flow.

## Revendications

1. Diffuseur d'air (1), en particulier pour un véhicule automobile, comprenant au moins un conduit de guidage d'air (2) qui est subdivisé en un conduit extérieur (2.1), en particulier de forme annulaire, et en un conduit intérieur (2.2), ou le conduit extérieur (2.1) entoure le conduit intérieur (2.2) et s'étend parallèlement à celui-ci, où plusieurs éléments déflecteurs d'air (3.1 à 3.3) associés au conduit intérieur (2.2) et au conduit extérieurs (2.1) sont disposés sur un axe de symétrie commun (5),
**caractérisé en ce qu'**il est prévu, pour le conduit extérieur (2.1), un ou plusieurs éléments déflecteurs d'air extérieurs (3.1, 3.3) dont les axes de rotation correspondants (4.1, 4.3) s'étendent de façon tangentielle au conduit intérieur (2.2), et l'élément déflecteur d'air extérieur respectif (3.1, 3.3) présente un contour adapté au contour extérieur du conduit intérieur (2.2), de sorte que l'élément déflecteur d'air extérieur respectif (3.1, 3.3) s'étend autour du conduit intérieur (2.2), dans l'une des positions (II) ouvrant le conduit extérieur (2.1).

2. Diffuseur d'air selon la revendication 1, où l'axe de symétrie (5) forme la médiane perpendiculaire ou la médiane horizontale du conduit de guidage d'air (2).

3. Diffuseur d'air selon la revendication 1 ou 2, où les éléments déflecteurs d'air (3.1 à 3.3) sont configurés en étant à symétrie d'axe par rapport à l'axe de symétrie (5) et/ou par rapport à leurs axes de rotation (4.1 à 4.3).

4. Diffuseur d'air selon l'une quelconque des revendications précédentes, où l'élément déflecteur d'air respectif (3.1 à 3.2) présente un axe de rotation (4.1 à 4.2) s'étendant de façon transversale par rapport au conduit de guidage d'air (2), axes de rotation qui sont disposés de façon commune le long de l'axe de symétrie (5).

5. Diffuseur d'air selon l'une quelconque des revendications précédentes, où l'élément déflecteur d'air respectif (3.1 à 3.3) présente un axe de rotation (4.1 à 4.3) s'étendant de façon transversale par rapport au conduit de guidage d'air (2), axes de rotation qui sont disposés en étant répartis le long de l'axe de symétrie (5) et s'étendent parallèlement les uns aux autres.

6. Diffuseur d'air selon l'une quelconque des revendications précédentes, où les éléments déflecteurs d'air (3.1 à 3.2) présentent un axe de rotation commun (4.1 à 4.2) s'étendant de façon transversale par rapport au conduit de guidage d'air (2).

7. Diffuseur d'air selon la revendication 6, où des arbres rotatifs (6.1 à 6.2) associés aux éléments déflecteurs d'air respectifs (3.1 à 3.2) sont disposés, le long de l'axe de rotation (4.1 à 4.2), en coulissant au moins partiellement les uns dans les autres, de façon télescopique, et/ou en s'engrenant.

8. Diffuseur d'air selon l'une quelconque des revendications précédentes, où les éléments déflecteurs d'air (3.1 à 3.3) sont disposés en étant orientables dans le même sens ou en sens opposé.

9. Diffuseur d'air selon l'une quelconque des revendications précédentes, où le ou les éléments déflecteurs d'air extérieurs (3.1, 3.3) sont configurés comme des volets qui sont dotés à chaque fois d'une partie convexe (7.1) et d'une partie concave (7.2), où la partie connexe (7.1) correspond essentiellement au contour intérieur du conduit extérieur (2.1), la partie concave (7.2) correspondant essentiellement au contour extérieur du conduit intérieur (2.2).

10. Diffuseur d'air selon l'une quelconque des revendications précédentes, où le conduit extérieur (2.1) présente au moins une cavité servant au logement de l'élément déflecteur d'air extérieur respectif (3.1, 3.3), dans une position (I) fermant complètement ce conduit (2.1).

11. Diffuseur d'air selon l'une quelconque des revendications précédentes, où le ou les éléments déflecteurs d'air extérieurs (3.1, 3.3) servant à la commande de l'écoulement dans le conduit extérieur (2.1) sont disposés en étant mobiles, par leur côté extérieur, en se déplaçant l'un vers l'autre ou à l'opposé l'un de l'autre, dans la direction de l'écoulement.

12. Diffuseur d'air selon l'une quelconque des revendications précédentes, où les axes de rotation (4.1, 4.3) du ou des éléments déflecteurs d'air extérieurs (3.1, 3.3) sont disposés les uns au-dessus des autres dans un plan en regardant dans la direction de l'écoulement, ou bien disposés les uns derrière les autres, de façon décalée, en regardant dans la direction de l'écoulement.

13. Diffuseur d'air selon l'une quelconque des revendications précédentes, où il est prévu, pour le conduit intérieur (2.2), un ou plusieurs éléments déflecteurs d'air intérieurs (3.2) dont les axes de rotation (4.2) s'étendent le long des médianes perpendiculaires ou des médianes horizontales du conduit intérieur et qui sont disposés les uns derrière les autres de façon décalée, dans la direction de l'écoulement.

14. Diffuseur d'air selon l'une quelconque des revendications précédentes, où le ou les éléments déflecteurs d'air (3.1 à 3.3) sont configurés comme un volet orientable, un volet déflecteur ou un volet papillon.

15. Diffuseur d'air selon l'une quelconque des revendications précédentes, où les axes de rotation (4.1, 4.3) du ou des éléments déflecteurs d'air extérieurs (3.1, 3.3) sont, par rapport à l'axe de rotation (4.2) de l'élément déflecteur d'air intérieur (3.2), disposés en étant les uns au-dessus des autres dans un plan, ou bien les uns derrière les autres, de façon décalée, en regardant dans la direction de l'écoulement.
